# EUROPEAN PATENT APPLICATION

(11) **EP 3 451 192 A1**
(43) Date of publication of application: **06.03.2019**
(21) Application number: 17801973.3
(22) Date of filing: 22.03.2017
(51) Int. Cl.: G06F 17/30

(54) **TEXT CLASSIFICATION METHOD AND APPARATUS**

(30) Priority: 25.05.2016 CN 201610354930
(71) Applicant: Huawei Technologies Co., Ltd., Longgang District Shenzhen, Guangdong 518129 (CN)
(72) Inventor: LIU, Bingyuan, Shenzhen Guangdong 518129 (CN); ZHANG, Xu, Shenzhen Guangdong 518129 (CN)
(74) Representative: Goddar, Heinz J.
(86) International application number: PCT/CN2017/077729
(87) International publication number: WO 2017/202125

(57) **Abstract**

The present invention discloses a text classification method and apparatus, and pertains to the field of computer technologies. The method includes: for each of multiple keywords included in a keyword library of a service information library, determining, according to a word vector model, a word vector corresponding to the keyword; determining a potential extended word of the keyword based on the word vector corresponding to the keyword; when an extension rule input for the potential extended word is received, and when an adding instruction for the potential extended word is detected, adding the potential extended word to the keyword library, and adding the extension rule to a matching rule library; determining, based on the keyword library and the matching rule library by using a pattern matching classifier, a first probability that a to-be-classified text belongs to each of multiple preset classes; and determining, based on the first probability, a class to which the to-be-classified text belongs from the multiple preset classes. According to the present invention, manual costs required for constructing the service information library can be reduced, and coverage and accuracy of text classification can be improved.

## Description

This application claims priority to Chinese Patent Application No. 201610354930.6, filed with the Chinese Patent Office on May 25, 2016 and entitled "TEXT CLASSIFICATION METHOD AND APPARATUS", which is incorporated herein by reference in its entirety.

### TECHNICAL FIELD

The present invention relates to the field of computer technologies, and in particular, to a text classification method and apparatus.

### BACKGROUND

With rapid development of computer technologies, massive information resources exist in a form of a text. Massive information resources generally include a large amount of real and valuable information, for example, if the information resource is conversation data between a user and a customer service representative in an industry, the conversation data generally reflects information about a service development status, service problem feedback, and the like. Therefore, to quickly and effectively obtain valuable information from massive information resources, texts corresponding to the information resource need to be classified.

Currently, a text classification method is provided, and is specifically: A person skilled in the art manually constructs a keyword library and a matching rule library of a service information library; after construction, based on the keyword library and the matching rule library, determines a probability that a to-be-classified text belongs to a preset class in multiple preset classes; and when the probability is greater than a specified probability, determines the preset class as a class to which the to-be-classified text belongs.

The keyword library and the matching rule library of the service information library are completely manually constructed. Therefore, a time for constructing the keyword library and the matching rule library is relatively long, construction efficiency is relatively low, and manual costs required for constructing and maintaining the keyword library and the matching rule library are relatively large. In addition, because the keyword library and the matching rule library completely depend on summary of experience of persons skilled in the art. Therefore, in the foregoing text classification method, accuracy and coverage are relatively low.

### SUMMARY

To resolve a problem in the prior art, embodiments of the present invention provide a text classification method and apparatus. The technical solutions are as follows:

According to a first aspect, a text classification method is provided, the method is applied to a text classification apparatus, and the method includes:
for each of multiple keywords included in a keyword library of a service information library, determining, according to a word vector model, a word vector corresponding to the keyword, where the word vector model may convert a word into a word vector, and therefore, the word vector corresponding to the keyword may be first determined according to the word vector model, so that a potential extended word of the keyword can be subsequently determined based on the word vector corresponding to the keyword; and the word vector model is obtained by training a word vector tool, and the word vector tool may be, for example, a Word2vec (Word to vector) tool.
determining a potential extended word of the keyword based on the word vector corresponding to the keyword.
when an extension rule input for the potential extended word is received, and when an adding instruction for the potential extended word is detected, adding the potential extended word to the keyword library, and adding the extension rule to a matching rule library of the service information library; where the adding instruction is used to instruct to add the potential extended word to the keyword library, and to add the extension rule input for the potential extended word to the matching rule library, the adding instruction may be triggered by a person skilled in the art, and may be triggered by the person skilled in the art by using a specified operation, and the specified operation may be a click operation, a double-click operation, a voice operation, or the like;
determining, based on the keyword library and the matching rule library by using a pattern matching classifier, a first probability that a to-be-classified text belongs to each of multiple preset classes; where the pattern matching classifier is configured to classify the to-be-classified text according to the keyword library and the matching rule library in the service information library, and the to-be-classified text may be one of a text dataset, or may be obtained in real time when a server communicates with a client; and
determining, based on the first probability that the to-be-classified text belongs to each of the multiple preset classes, a class to which the to-be-classified text belongs from the multiple preset classes, where the multiple preset classes may be preset, for example, the multiple preset classes may be bonus point redemption/bonus point query, international roaming/tariff consultation, and credit resumption/suspension cause.

In this embodiment of the present invention, the keyword library and the matching rule library are constructed semi-manually, so that a construction time is reduced, construction efficiency is improved, and manual costs for constructing and maintaining the keyword library and the matching rule library are reduced. In addition, because the keyword library and the matching rule library can be extended and updated according to the potential extended word, coverage of the keyword library and the matching rule library can be improved. In addition, the potential extended word and the extension rule are added to the keyword library and the matching rule library based on the adding instruction, that is, the potential extended word and the extension rule are added to the keyword library and the matching rule library after confirmation by a person skilled in the art. Therefore, accuracy of the keyword library and the matching rule library can be improved, and further, coverage and accuracy of text classification based on the keyword library and the matching rule library can be improved.

In a possible design, the determining a potential extended word of the keyword based on the word vector corresponding to the keyword includes:
determining, according to the word vector model, a word vector corresponding to each word included in a text dataset, where: the text dataset includes multiple texts, the multiple texts are texts related to the multiple preset classes, for example, the multiple texts may be a description text and a customer service text of the multiple preset classes, and this is not specifically limited in this embodiment of the present invention; in addition, the description text is a text that records description data of a preset class, and the customer service text is a text that records data, related to a preset class, of a conversation between a user and a customer service representative; and
calculating similarity between the word vector corresponding to the keyword and the word vector corresponding to each word included in the text dataset; where because semantic information of the potential extended word of the keyword is similar to semantic information of the keyword, the similarity between the word vector corresponding to the keyword and the word vector corresponding to each word included in the text dataset may be calculated, so as to determine, according to the similarity, whether a word is the potential extended word of the keyword; optionally, a Euclidean distance between the word vector corresponding to the keyword and the word vector corresponding to each word included in the text dataset may be calculated, and the Euclidean distance obtained by means of calculation is determined as the similarity between the two; or cosine similarity between the word vector corresponding to the keyword and the word vector corresponding to each word included in the text dataset may be calculated, and the cosine similarity obtained by means of calculation is determined as the similarity between the two, and this is not limited in this embodiment of the present invention; and
determining a similar word in the text dataset as the potential extended word of the keyword, where similarity between a word vector corresponding to the similar word and the word vector corresponding to the keyword is greater than specified similarity; when similarity between a word vector corresponding to a word and the word vector corresponding to the keyword is greater than the specified similarity, it indicates that semantic information of the word is relatively similar to semantic information of the keyword, and the word may be determined as the potential extended word of the keyword; and the specified similarity may be preset according to a specific service requirement, for example, the specified similarity may be 0.75, 0.8, or the like, and this is not specifically limited in this embodiment of the present invention.

In this embodiment of the present invention, the potential extended word of the keyword may be determined, from multiple words included in the text dataset, according to the similarity between the word vector corresponding to the keyword and the word vector corresponding to each word included in the text dataset, so that an operation is simple and is easy to implement. In addition, a word vector of a word may reflect semantic information of the word, and therefore, accuracy of determining the potential extended word according to the method in this embodiment of the present invention is relatively high.

In a possible design, the determining, based on the keyword library and the matching rule library by using a pattern matching classifier, a first probability that a to-be-classified text belongs to each of multiple preset classes includes:
obtaining a word that is the same as a keyword in the keyword library from the to-be-classified text by using the pattern classifier; where for example, the pattern matching classifier may obtain the word that is the same as the keyword in the keyword library from the to-be-classified text by using a multi-pattern matching algorithm such as a Wu-Manber algorithm; and the Wu-Manber algorithm may quickly perform character string matching by using a jump table, so that when the pattern matching classifier obtains the word that is the same as the keyword in the keyword library from the to-be-classified text by using the Wu-Manber algorithm, obtaining efficiency can be improved;
determining the obtained word as a keyword of the to-be-classified text; where because the multiple keywords in the keyword library are corresponding to multiple matching rules in the matching rule library, when the to-be-classified text includes the word that is the same as the keyword in the keyword library, the word may be determined as the keyword of the to-be-classified text, so that the matching rule library is searched for a matching rule corresponding to the keyword of the to-be-classified text based on the keyword of the to-be-classified text; and
classifying the to-be-classified text based on the keyword of the to-be-classified text and the matching rule library by using the pattern matching classifier, to obtain the first probability that the to-be-classified text belongs to each of the multiple preset classes, where for example, for each of the multiple matching rules included in the matching rule library, the pattern matching classifier may determine, based on the keyword of the to-be-classified text, whether the to-be-classified text meets the matching rule, and when the to-be-classified text meets the matching rule, determine that a first probability that the to-be-classified text belongs to a preset class corresponding to the matching rule is 1, or when the to-be-classified text does not meet the matching rule, determine a keyword vector of the to-be-classified text based on the keyword of the to-be-classified text, determine a keyword vector of the matching rule based on at least one keyword included in the matching rule, then calculate similarity between the keyword vector of the to-be-classified text and the keyword vector of the matching rule, and determine the similarity obtained by means of calculation as a first probability that the to-be-classified text belongs to a preset class corresponding to the matching rule; the keyword in the to-be-classified text is identified by using the pattern matching classifier, an identification process is simple and convenient, and because the keyword library is extended and updated, the keyword of the to-be-classified text can be identified more accurately; and then the to-be-classified text may be classified based on the keyword of the to-be-classified text and the matching rule library by using the pattern matching classifier, to obtain the first probability that the to-be-classified text belongs to each of the multiple preset classes; the to-be-classified keyword is accurate, and therefore, accuracy of the first probability is ensured.

In a possible design, the determining, based on the first probability that the to-be-classified text belongs to each of the multiple preset classes, a class to which the to-be-classified text belongs from the multiple preset classes includes:
determining, based on multiple preset semantic feature vectors included in a semantic classifier, a second probability that the to-be-classified text belongs to each of the multiple preset classes, where the multiple preset semantic feature vectors are in a one-to-one correspondence with the multiple preset classes, and the semantic classifier is configured to classify the to-be-classified text based on semantic information of the to-be-classified text, for example, the semantic classifier may be a recursive convolutional neural network; and
determining, based on the first probability that the to-be-classified text belongs to each of the multiple preset classes and the second probability that the to-be-classified text belongs to each of the multiple preset classes, the class to which the to-be-classified text belongs from the multiple preset classes.

In this embodiment of the present invention, the pattern matching classifier and the semantic classifier may be combined to perform text classification, so as to avoid inaccuracy caused by depending on a single method for text classification, thereby improving accuracy of text classification.

In a possible design, the determining, based on multiple preset semantic feature vectors included in a semantic classifier, a second probability that the to-be-classified text belongs to each of the multiple preset classes includes:
determining a semantic feature vector of each word in the to-be-classified text by using the semantic classifier; determining a semantic feature vector of the to-be-classified text based on the semantic feature vector of each word in the to-be-classified text by using the semantic classifier; where for example, a semantic feature vector of the to-be-classified text may be determined based on the semantic feature vector of each word in the to-be-classified text by using a text feature extraction layer of the semantic classifier, and the semantic feature vector of the to-be-classified text is a feature vector that can reflect semantic information of the to-be-classified text;
for each of the multiple preset semantic feature vectors, calculating similarity between the preset semantic feature vector and the semantic feature vector of the to-be-classified text by using the semantic classifier; where for example, the similarity between the preset semantic feature vector and the semantic feature vector of the to-be-classified text may be calculated by using a classification layer of the semantic classifier; and
determining the similarity obtained by means of calculation as a second probability that the to-be-classified text belongs to a preset class corresponding to the preset semantic feature vector.

It should be noted that a word feature extraction layer and the text feature extraction layer may use a recursive structure, to ensure that a semantic feature vector of a word determined by using the word feature extraction layer can reflect semantic information of the word, and can further reflect a dependency relationship of the word in a context, so as to further ensure that a semantic feature vector of the to-be-classified text that is determined based on the semantic feature vector of the word by using the text feature extraction layer can completely reflect semantic information of the to-be-classified text.

In this embodiment of the present invention, the semantic classifier classifies the to-be-classified text based on the semantic information of the to-be-classified text, so as to effectively avoid misclassification of the to-be-classified text caused by lack of information, thereby improving text classification accuracy.

In a possible design, the determining, based on the first probability that the to-be-classified text belongs to each of the multiple preset classes and the second probability that the to-be-classified text belongs to each of the multiple preset classes, the class to which the to-be-classified text belongs from the multiple preset classes includes:
determining at least one target preset class from the multiple preset classes;
for each of the at least one target preset class, determining a first probability and a second probability corresponding to the target preset class;
performing, based on a first weight corresponding to the pattern matching classifier and a second weight corresponding to the semantic classifier, weighted averaging on the first probability and the second probability corresponding to the target preset class, to obtain a weighted probability; where the first weight and the second weight may be preset, and in actual application, the first weight and the second weight may be set and adjusted according to reliability of the pattern matching classifier and the semantic classifier, and may be set and adjusted according to different service requirements; and
when the weighted probability is greater than a specified probability, determining the target preset class as the class to which the to-be-classified text belongs.

In this embodiment of the present invention, when the first weight and the second weight are set and adjusted according to reliability of the pattern matching classifier and the semantic classifier, accuracy of the obtained weighted probability can be ensured, and further, accuracy of the class to which the to-be-classified text belongs and that is determined based on the weighted probability can be ensured. When the first weight and the second weight are set and adjusted according to different service requirements, the obtained weighted probability can meet a text classification requirement of a person skilled in the art, and further, the class to which the to-be-classified text belongs and that is determined based on the weighted probability can meet the text classification requirement of the person skilled in the art.

In a possible design, the determining at least one target preset class from the multiple preset classes includes:
determining each of the multiple preset classes as the target preset class.

In this embodiment of the present invention, each of the multiple preset classes may be directly determined as the target preset class. In this case, the server does not need to perform another operation, so that efficiency of determining the target preset class can be improved.

In another possible design, the determining at least one target preset class from the multiple preset classes includes at least one of the following two manners:
obtaining N first probabilities from multiple first probabilities corresponding to the multiple preset classes in descending order of the multiple first probabilities, and determining a preset class corresponding to each of the N first probabilities as the target preset class, where N is a natural number greater than or equal to 1; or
obtaining N second probabilities from multiple second probabilities corresponding to the multiple preset classes in descending order of the multiple second probabilities, and determining a preset class corresponding to each of the N second probabilities as the target preset class.

In this embodiment of the present invention, the at least one target preset class may be determined based on the first probability and the second probability. In this case, the at least one target preset class is some preset classes in the multiple preset classes. Therefore, the server does not need to calculate a weighted probability for each of the multiple preset classes in subsequent steps, but calculates weighted probabilities for only some preset classes in the multiple preset classes, so that processing resources of the server can be saved, and text classification efficiency can be improved.

According to a second aspect, an embodiment of the present invention provides a text classification apparatus, where the text classification apparatus has a function for implementing actions of the text classification apparatus in the first aspect. The function may be implemented by using hardware, or may be implemented by executing corresponding software by hardware. The hardware or the software includes one or more modules corresponding to the foregoing function.

In a possible design, a structure of the text classification apparatus includes a processor and a memory. The memory is configured to store a program that supports the text classification apparatus in performing the foregoing method, and the processor is configured to execute the program stored in the memory. The text classification apparatus may further include a communications interface, which is used by the text classification apparatus to communicate with another apparatus or a communications network.

According to a third aspect, an embodiment of the present invention provides a computer storage medium, configured to store a computer software instruction used by the foregoing text classification apparatus, and the computer storage medium includes a program designed for executing the text classification apparatus of the foregoing aspect.

Compared with the prior art, in this embodiment of the present invention, for each of the multiple keywords included in the keyword library of the service information library, the word vector corresponding to the keyword is determined according to the word vector model; the potential extended word of the keyword is determined based on the word vector corresponding to the keyword; and then, when the extension rule input for the potential extended word is received, and when the adding instruction for the potential extended word is detected, the potential extended word is added to the keyword library, and the extension rule is added to the matching rule library of the service information library. That is, the keyword library and the matching rule library are constructed semi-manually, so that a construction time is reduced, construction efficiency is improved, and manual costs for constructing and maintaining the keyword library and the matching rule library are reduced. In addition, because the keyword library and the matching rule library can be extended and updated according to the potential extended word determined by the server, coverage of the keyword library and the matching rule library can be improved. In addition, because the adding instruction is triggered by a person skilled in the art, the potential extended word and the extension rule are added to the keyword library and the matching rule library after confirmation by the person skilled in the art. Therefore, accuracy of the keyword library and the matching rule library can be improved. Because coverage and accuracy of the keyword library and the matching rule library are improved, the first probability that the to-be-classified text belongs to each of the multiple preset classes is determined based on the keyword library and the matching rule library, and the class to which the to-be-classified text belongs is determined from the multiple preset classes based on the first probability that the to-be-classified text belongs to each of the multiple preset classes, coverage and accuracy of text classification can be improved.

These aspects or another aspect of the present invention is clearer and more comprehensible in description in the following embodiments.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1A is a schematic diagram of a customer service text according to an embodiment of the present invention;
FIG. 1B is a schematic diagram of a system architecture related in a text classification method according to an embodiment of the present invention;
FIG. 1C is a schematic structural diagram of a server according to an embodiment of the present invention;
FIG. 2 is a schematic structural diagram of a computer device according to an embodiment of the present invention;
FIG. 3 is a flowchart of a text classification method according to an embodiment of the present invention; and
FIG. 4 is a schematic structural diagram of a text classification apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

An application scenario related in the embodiments of the present invention is first described before the embodiments of the present invention are described in detail.

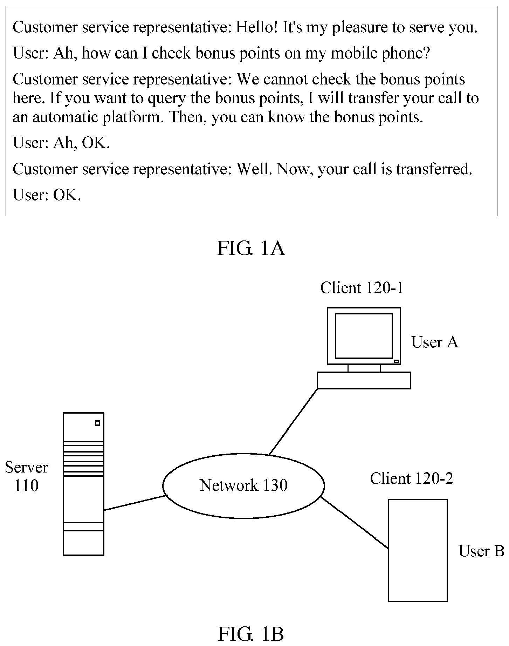

A customer service platform is always the most important service window of telecommunications operators or Internet operators, such as the 10086 platform or the Taobao customer service platform. In an example of the 10086 platform, in the first half year of 2015, a customer service call completion volume is approximately 5.5 million per day. Millions of pieces of customer service data are stored in the 10086 platform every day, and one piece of customer service data is a record of a conversation between a user and a customer service representative. The customer service data is generally stored in a form of recording. Therefore, to process the customer service data conveniently, usually voice resolution may be performed on the customer service data, to convert the customer service data into a customer service text. FIG. 1A shows a specific example of a customer service text.

Massive customer service data generally includes a large amount of real and valuable information, such as a service development status or service problem feedback, and the information may be an important reference for implementation of measures such as product innovation, marketing completion, and network optimization. Therefore, to quickly and effectively obtain valuable information from massive customer service data, customer service texts corresponding to the customer service data may be classified.

In related technologies, a person skilled in the art may manually construct a keyword library and a matching rule library of a service information library; and after construction is completed, based on the keyword library and the matching rule library, determine a class to which a to-be-classified text belongs from multiple preset classes. When the keyword library and the matching rule library of the service information library are completely manually constructed, a time for constructing the service information library is relatively long, construction efficiency is relatively low, and manual costs required for constructing and maintaining the service information library are relatively large. In addition, when the service information library completely depends on summary of experience of persons skilled in the art, accuracy and coverage of text classification based on the service information library are relatively low. Therefore, the embodiments of the present invention provide a text classification method, to improve accuracy and coverage of text classification and reduce manual costs.

FIG. 1B is a schematic diagram of a system architecture related in a text classification method according to an embodiment of the present invention. Referring to FIG. 1B, the system architecture includes a server 110, a client 120, and a network 130 used to establish a communication connection between the server 110 and the client 120. A user may communicate with the server 110 by using the client 120. It should be noted that different users may communicate with the server 110 by using different types of the client 120. For example, a user A may communicate with the server 110 by using a personal computer 120-1, and a user B may communicate with the server 110 by using a mobile terminal 120-2, and this is not specifically limited in this embodiment of the present invention. Communication data is generated in a process in which a user communicates with the server 110 by using the client 120. The communication data may be represented in a form of a text, for example, the communication data may be represented as a customer service text shown in FIG. 1A. The server 110 is configured to obtain a to-be-classified text, and classify the to-be-classified text. The to-be-classified text may be obtained in real time when the server 110 communicates with the client 120, or may be a text pre-stored in the server 110 or another storage device, and this is not specifically limited in this embodiment of the present invention.

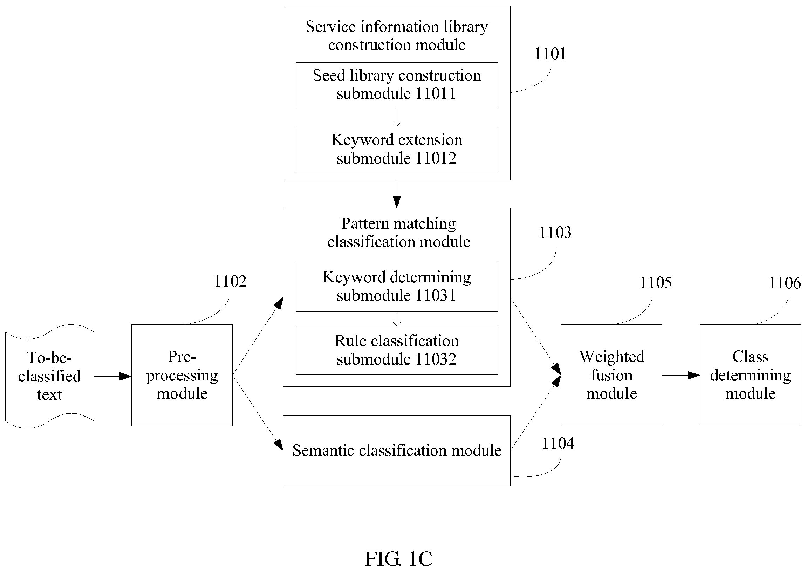

FIG. 1C is a schematic structural diagram of a server 110 according to an embodiment of the present invention. Referring to FIG. 1C, the server 110 includes a service information library construction module 1101, a pre-processing module 1102, a pattern matching classification module 1103, a semantic classification module 1104, a weighted fusion module 1105, and a class determining module 1106.

When the server 110 needs to classify a to-be-classified text, the server 110 may first input the to-be-classified text into the pre-processing module 1102. The pre-processing module 1102 may pre-process the to-be-classified text, to eliminate obvious noise interference in the to-be-classified text. Then, the pre-processing module 1102 may separately input the to-be-classified text obtained after pre-processing into the pattern matching classification module 1103 and the semantic classification module 1104. The pattern matching module 1103 may classify, based on a service information library constructed by the service information library construction module 1101, the to-be-classified text by using a pattern matching classifier, to obtain a first probability that the to-be-classified text belongs to each of multiple preset classes, and input the first probability into the weighted fusion module 1105. The semantic classification module 1104 may classify the to-be-classified text by using a semantic classifier, to obtain a second probability that the to-be-classified text belongs to each of the multiple preset classes, and input the second probability into the weighted fusion module 1105. The weighted fusion module 1105 may determine, according to the first probability that the to-be-classified text belongs to each of the multiple preset classes and the second probability that the to-be-classified text belongs to each of the multiple preset classes, a weighted probability that the to-be-classified text belongs to a preset class in the multiple preset classes, and input the weighted probability into the class determining module 1106. The class determining module 1106 may determine, according to the weighted probability that the to-be-classified text belongs to a preset class in the multiple preset classes, a class to which the to-be-classified text belongs from the multiple preset classes.

Specifically, functions of the multiple modules included in the server 110 are described as follows:
The service information library construction module 1101 is configured to construct the service information library according to a word vector model. The service information library construction module 1101 may include a seed library construction submodule 11011 and a keyword extension submodule 11012. The seed library construction submodule 11011 includes a seed information library constructed by a person skilled in the art in advance. The seed information library includes a keyword library and a matching rule library. The keyword library includes multiple keywords, and the matching rule library includes multiple matching rules. Each of the multiple matching rules includes at least one keyword in the keyword library. The keyword extension submodule 11012 is configured to determine a potential extended word of each of the multiple keywords according to the word vector model. Then, the person skilled in the art may extend and update the keyword library and the matching rule library of the seed information library based on the potential extended words of the multiple keywords, and determine the extended and updated seed information library as a service information library.

The pre-processing module 1102 is configured to pre-process the to-be-classified text. Because the to-be-classified text includes a large amount of useless information, such as modal particles, auxiliary words, and conjunctions, the to-be-classified text is pre-processed to eliminate obvious noise interference in the to-be-classified text. In a possible design, the pre-processing may include at least one of Chinese word segmentation, part-of-speech filtering, or stop word filtering. The Chinese word segmentation is to convert a text into a set of Chinese characters. The part-of-speech filtering is to remove a modal particle, an auxiliary word, a conjunction, and the like in a text. The stop word filtering is to remove a word without practical meaning in a text, for example, to remove "the", "it", and the like in a text.

The pattern matching classification module 1103 is configured to classify, based on the service information library constructed by the service information library construction module 1101 and by using the pattern matching classifier, the to-be-classified text pre-processed by the pre-processing module 1102, to obtain the first probability that the to-be-classified text belongs to each of the multiple preset classes. The pattern matching classification module 1103 may include a keyword determining submodule 11031 and a rule classification submodule 11032. The keyword determining submodule 11031 is configured to determine a keyword of the to-be-classified text based on the keyword library of the service information library by using the pattern matching classifier. In a possible design, the pattern matching classifier may determine the keyword of the to-be-classified text based on the keyword library by using a multi-pattern matching algorithm. The rule classification submodule 11032 is configured to classify the to-be-classified text based on the keyword of the to-be-classified text and the matching rule library of the service information library by using the pattern matching classifier, to obtain the first probability that the to-be-classified text belongs to each of the multiple preset classes.

The semantic classification module 1104 is configured to classify, by using the semantic classifier, the to-be-classified text pre-processed by the pre-processing module 1102, to obtain the second probability that the to-be-classified text belongs to each of the multiple preset classes. When classifying the to-be-classified text, the semantic classification module 1104 may determine, based on multiple preset semantic feature vectors included in the semantic classifier, the second probability that the to-be-classified text belongs to each of the multiple preset classes. Specifically, a semantic feature vector of each word in the to-be-classified text is determined by using the semantic classifier; a semantic feature vector of the to-be-classified text is determined based on the semantic feature vector of each word in the to-be-classified text by using the semantic classifier; for each of the multiple preset semantic feature vectors, similarity between the preset semantic feature vector and the semantic feature vector of the to-be-classified text is calculated by using the semantic classifier; and the similarity obtained by means of calculation is determined as a second probability that the to-be-classified text belongs to a preset class corresponding to the preset semantic feature vector.

The weighted fusion module 1105 is configured to determine, according to the first probability, obtained by the pattern matching classification module 1103, that the to-be-classified text belongs to each of the multiple preset classes and the second probability, obtained by the semantic classification module 1104, that the to-be-classified text belongs to each of the multiple preset classes, a weighted probability that the to-be-classified text belongs to a preset class in the multiple preset classes. In a possible design, weighted averaging is performed, based on a first weight corresponding to the pattern matching classifier and a second weight corresponding to the semantic classifier, on the first probability and the second probability corresponding to a preset class, to obtain a weighted probability that the to-be-classified text belongs to the preset class.

The class determining module 1106 is configured to determine, according to the weighted probability, obtained by the weighted fusion module 1105, that the to-be-classified text belongs to a preset class in the multiple preset classes, the class to which the to-be-classified text belongs from the multiple preset classes. In a possible design, when the weighted probability that the to-be-classified text belongs to a preset class in the multiple preset classes is greater than a specified probability, the preset class may be determined as the class to which the to-be-classified text belongs. The specified probability may be preset according to a specific service requirement, and this is not specifically limited in this embodiment of the present invention.

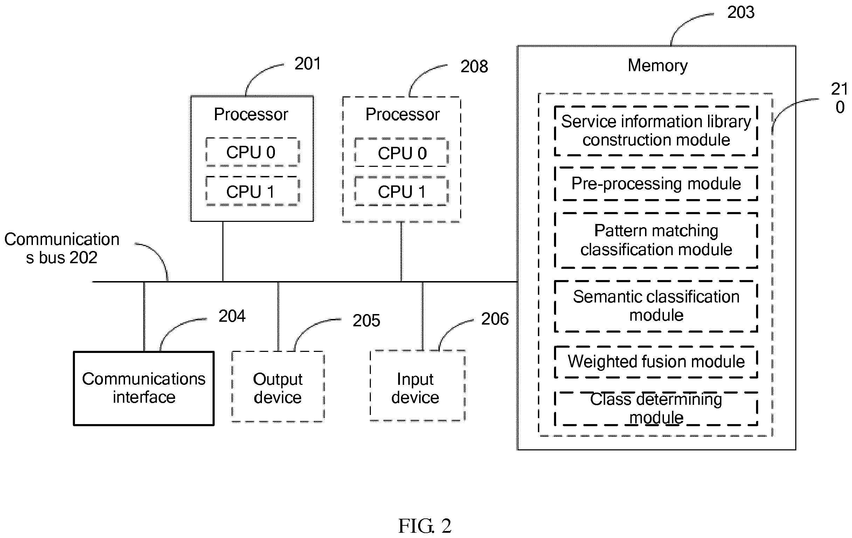

FIG. 2 is a schematic structural diagram of a computer device according to an embodiment of the present invention. The server 110 in FIG. 1B or FIG. 1C may be implemented by the computer device shown in FIG. 2. Referring to FIG. 2, the computer device includes at least one processor 201, a communications bus 202, a memory 203, and at least one communications interface 204.

The processor 201 may be a general-purpose central processing unit (CPU), a microprocessor, an application-specific integrated circuit (application-specific integrated circuit, ASIC), or one or more integrated circuits that are configured to control program execution of the solutions of the present invention.

The communications bus 202 may include a path that transmits information between the foregoing components.

The memory 203 may be a read-only memory (read-only memory, ROM) or a static storage device of another type that can store static information and instructions, a random access memory (random access memory, RAM), or a dynamic storage device of another type that can store information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disk storage, optical disc storage (including a compact disc, a laser disc, an optical disc, a digital versatile disc, and a blue-ray disc, and the like), a disk storage medium or another disk storage device, or any other medium that can be used to carry or store expected program code in a command or data structure form and can be accessed by a computer; however, the memory is not limited thereto. The memory 203 may independently exist, and is connected to the processor 201 by using the communications bus 202. The memory 203 and the processor 201 may be integrated together.

The communications interface 204 may be any apparatus like a transceiver, and is configured to communicate with another device or communications network, such as an Ethernet network, a radio access network (RAN), or a wireless local area network (Wireless Local Area Networks, WLAN).

In specific implementation, in an embodiment, the processor 201 may include one or more CPUs, such as a CPU 0 and a CPU 1 shown in FIG. 2.

In specific implementation, in an embodiment, the computer device may include multiple processors, such as a processor 201 and a processor 208 shown in FIG. 2. Each of the processors may be a single-CPU (single-CPU) processor, or may be a multi-CPU (multi-CPU) processor. The processor herein may be one or more devices, a circuit, and/or a CPU used to process data (such as a computer program instruction).

In specific implementation, in an embodiment, the computer device may further include an output device 205 and an input device 206. The output device 205 communicates with the processor 201, and may display information in multiple manners. For example, the output device 205 may be a liquid crystal display (liquid crystal display, LCD), a light emitting diode (light emitting diode, LED) display device, a cathode-ray tube (cathode ray tube, CRT) display device, a projector, or the like. The input device 206 communicates with the processor 201, and may receive user input in multiple manners. For example, the input device 206 may be a mouse, a keyboard, a touchscreen device, a sensing device, or the like.

The foregoing computer device may be a general-purposed computer device or a special-purpose computer device. In specific implementation, the computer device may be a desktop, a portable computer, a network server, a personal digital assistant (Personal Digital Assistant, PDA), a mobile phone, a tablet computer, a wireless terminal device, a communications device, or an embedded device. The type of the computer device is not limited in this embodiment of the present invention.

The memory 203 is configured to store program code used to execute the solutions of the present invention, and the processor 201 controls the execution. The processor 201 is configured to execute program code 210 stored in the memory 203. The program code 210 may include one or more software modules (such as a service information library construction module, a pre-processing module, a pattern matching classification module, a semantic classification module, a weighted fusion module, and a class determining module). The server 110 in FIG. 1B or FIG. 1C may classify a to-be-classified text by using the processor 201 and one or more software modules in the program code 210 in the memory 203.

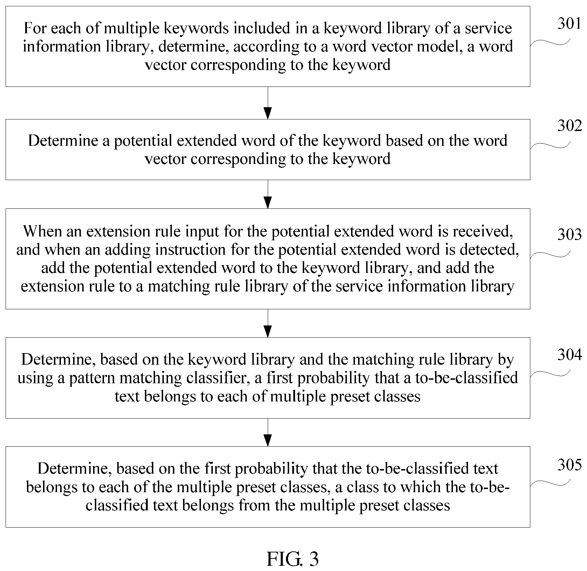

FIG. 3 is a flowchart of a text classification method according to an embodiment of the present invention, and the method is applied to a server. Referring to FIG. 3, the method includes the following steps.

Step 301. For each of multiple keywords included in a keyword library of a service information library, determine, according to a word vector model, a word vector corresponding to the keyword.

It should be noted that the service information library is used to assist a pattern matching classifier to classify a to-be-classified text, and the service information library may include the keyword library, and the keyword library may include the multiple keywords.

In addition, the word vector model is used to convert a word into a word vector, the word vector model is obtained by training a word vector tool, and the word vector tool may be a Word2vec (Word to vector) tool or the like. This is not specifically limited in this embodiment of the present invention.

For the operation of determining, according to a word vector model, a word vector corresponding to the keyword, refer to related technologies. This is not described in detail in this embodiment of the present invention.

Further, before the word vector corresponding to the keyword is determined according to the word vector model, a text dataset may be obtained, and multiple texts included in the text dataset are pre-processed, to obtain a first training corpus. Then, the first training corpus is used as input into the word vector tool to train the word vector tool, to obtain the word vector model.

It should be noted that the text dataset may be stored in the server, or may be stored in another storage device, and the server and the another storage device may communicate with each other by using a wired network or a wireless network. This is not specifically limited in this embodiment of the present invention. The text dataset includes multiple texts, and the multiple texts are texts related to the multiple preset classes. For example, the multiple texts may be a description text and a customer service text of the multiple preset classes. This is not specifically limited in this embodiment of the present invention. The description text is a text that records description data of a preset class, and the customer service text is a text that records data, related to a preset class, of a conversation between a user and a customer service representative.

In addition, the multiple preset classes may be preset, for example, the multiple preset classes may be bonus point redemption/bonus point query, international roaming/tariff consultation, and credit resumption/suspension cause. This is not specifically limited in this embodiment of the present invention.

In addition, the pre-processing may include at least one of Chinese word segmentation, part-of-speech filtering, or stop word filtering. This is not specifically limited in this embodiment of the present invention. The Chinese word segmentation is to convert a text into a set of Chinese characters. The part-of-speech filtering is to remove a modal particle, an auxiliary word, a conjunction, and the like in a text. The stop word filtering is to remove a word without practical meaning in a text, for example, to remove "the", "it", and the like in a text.

It should be noted that, for the operation of pro-processing multiple texts included in the text dataset, refer to related technologies. This is not described in detail in this embodiment of the present invention.

In addition, for the operation of using the first training corpus as input into the word vector tool to train the word vector tool, to obtain the word vector model, refer to related technologies. This is not described in detail in this embodiment of the present invention.

In addition, by using the word vector model obtained by training the word vector tool, each word included in the text dataset may be converted into a word vector of K dimensions. K is a natural number greater than or equal to 1, and a value of K may be preset by a person skilled in the art. This is not specifically limited in this embodiment of the present invention.

It should be noted that each keyword in the keyword library in the service information library may be defined by a person skilled in the art according to experience after observation of the text dataset. This is not specifically limited in this embodiment of the present invention.

Step 302. Determine a potential extended word of the keyword based on the word vector corresponding to the keyword.

Specifically, a word vector corresponding to each word included in a text dataset is determined according to the word vector model; similarity between the word vector corresponding to the keyword and the word vector corresponding to each word included in the text dataset is calculated; and a similar word in the text dataset is determined as the potential extended word of the keyword, where similarity between a word vector corresponding to the similar word and the word vector corresponding to the keyword is greater than specified similarity.

It should be noted that the specified similarity may be preset according to a specific service requirement, for example, the specified similarity may be 0.75, 0.8, or the like. This is not specifically limited in this embodiment of the present invention.

When the similarity between the word vector corresponding to the keyword and the word vector corresponding to each word included in the text dataset is calculated, a Euclidean distance between the two may be calculated, and the Euclidean distance obtained by means of calculation is determined as the similarity between the two; or cosine similarity between the two may be calculated, and the cosine similarity obtained by means of calculation is determined as the similarity between the two. Certainly, in actual application, the similarity between the word vector corresponding to the keyword and the word vector corresponding to each word included in the text dataset may be calculated by using another method. This is not specifically limited in this embodiment of the present invention.

Step 303. When an extension rule input for the potential extended word is received, and when an adding instruction for the potential extended word is detected, add the potential extended word to the keyword library, and add the extension rule to a matching rule library of the service information library.

It should be noted that the adding instruction is used to instruct to add the potential extended word to the keyword library, and to add the extension rule input for the potential extended word to the matching rule library, the adding instruction may be triggered by a person skilled in the art, and may be triggered by the person skilled in the art by using a specified operation, and the specified operation may be a click operation, a double-click operation, a voice operation, or the like. This is not specifically limited in this embodiment of the present invention.

In addition, the matching rule library may include multiple matching rules, and each of the multiple matching rules may include at least one keyword in the keyword library. For example, the matching rule may use a logic conjunction "and" or a symbol (&) to associate multiple keywords, to represent that when a text includes all the keywords included in the matching rule, it is determined that the text meets the matching rule.

In addition, each of the multiple preset classes may be corresponding to at least one matching rule in the matching rule library. This is not specifically limited in this embodiment of the present invention.

In this embodiment of the present invention, a person skilled in the art may store multiple keywords in the keyword library of the service information library in advance, and store multiple matching rules in the matching rule library in advance, and each of the multiple matching rules includes at least one of the multiple keywords. The server may determine a potential extended word of each of the multiple keywords according to the word vector model. Then, the person skilled in the art may identify and analyze the potential extended word, and when the person skilled in the art determines that the potential extended word may be used to construct a matching rule of a preset class, the person skilled in the art may input an extension rule for the potential extended word, add the potential extended word to the keyword library, and add the extension rule to the matching rule library, so that the keyword library and the matching rule library are extended and updated.

It is easy to find that the keyword library and the matching rule library in this embodiment of the present invention are constructed semi-manually, so that a construction time is reduced, construction efficiency is improved, and manual costs for constructing and maintaining the keyword library and the matching rule library are reduced. In addition, because the keyword library and the matching rule library can be extended and updated according to the potential extended word determined by the server, coverage of the keyword library and the matching rule library can be improved. In addition, the potential extended word and the extension rule are added to the keyword library and the matching rule library based on the adding instruction, that is, the potential extended word and the extension rule are added to the keyword library and the matching rule library after confirmation by a person skilled in the art. Therefore, accuracy of the keyword library and the matching rule library can be improved, and further, coverage and accuracy of performing subsequent text classification based on the keyword library and the matching rule library can be improved.

Step 304. Determine, based on the keyword library and the matching rule library by using a pattern matching classifier, a first probability that a to-be-classified text belongs to each of multiple preset classes.

It should be noted that the to-be-classified text may be one of the foregoing text dataset, or may be obtained in real time when the server communicates with a client. This is not specifically limited in this embodiment of the present invention.

In addition, before the first probability that the to-be-classified text belongs to each of the multiple preset classes is determined based on the keyword library and the matching rule library by using the pattern matching classifier, the to-be-classified text may be further pre-processed, so that subsequently the first probability that the to-be-classified text belongs to each of the multiple preset classes can be quickly determined based on the pre-processed to-be-classified text by using the pattern matching classifier, to improve determining efficiency.

It should be noted that the operation of pre-processing the to-be-classified text is similar to a related operation in step 301. This is not described again in this embodiment of the present invention.

Specifically, when the first probability that the to-be-classified text belongs to each of the multiple preset classes is determined based on the keyword library and the matching rule library by using the pattern matching classifier, the server may obtain, from the to-be-classified text by using the pattern matching classifier, a word that is the same as a keyword in the keyword library; determine the obtained word as a keyword of the to-be-classified text; classify the to-be-classified text based on the keyword of the to-be-classified text and the matching rule library by using the pattern matching classifier, to obtain the first probability that the to-be-classified text belongs to each of the multiple preset classes.

When the word that is the same as the keyword in the keyword library is obtained from the to-be-classified text by using the pattern matching classifier, the pattern matching classifier may obtain the word that is the same as the keyword in the keyword library from the to-be-classified text by using a specified matching algorithm. Certainly, in actual application, the pattern matching classifier may obtain the word that is the same as the keyword in the keyword library from the to-be-classified text in another manner. This is not specifically limited in this embodiment of the present invention.

It should be noted that the specified matching algorithm may be preset, for example, the specified matching algorithm may be a multi-pattern matching algorithm, and the multi-pattern matching algorithm may be a Wu-Manber algorithm. This is not specifically limited in this embodiment of the present invention. In addition, the Wu-Manber algorithm may quickly perform character string matching by using a jump table, so that when the pattern matching classifier obtains the word that is the same as the keyword in the keyword library from the to-be-classified text by using the Wu-Manber algorithm, obtaining efficiency can be improved.

In addition, for the operation of obtaining, from the to-be-classified text by using the pattern matching classifier, the word that is the same as the keyword in the keyword library, refer to related technologies. This is not described in detail in this embodiment of the present invention.

When the to-be-classified text is classified based on the keyword of the to-be-classified text and the matching rule library by using the pattern matching classifier, to obtain the first probability that the to-be-classified text belongs to each of the multiple preset classes, for each of the multiple matching rules included in the matching rule library, the pattern matching classifier may determine, based on the keyword of the to-be-classified text, whether the to-be-classified text meets the matching rule, and when the to-be-classified text meets the matching rule, determine that a first probability that the to-be-classified text belongs to a preset class corresponding to the matching rule is 1; or when the to-be-classified text does not meet the matching rule, determine a keyword vector of the to-be-classified text based on the keyword of the to-be-classified text, determine a keyword vector of the matching rule based on at least one keyword included in the matching rule, then calculate similarity between the keyword vector of the to-be-classified text and the keyword vector of the matching rule, and determine the similarity obtained by means of calculation as a first probability that the to-be-classified text belongs to a preset class corresponding to the matching rule.

The operation of calculating similarity between the keyword vector of the to-be-classified text and the keyword vector of the matching rule is similar to a related operation in step 302. This is not described again in this embodiment of the present invention.

When it is determined, based on the keyword of the to-be-classified text, whether the to-be-classified text meets the matching rule, it may be determined, based on the keyword of the to-be-classified text, whether the to-be-classified text includes all keywords in the matching rule; and when the to-be-classified text includes all the keywords in the matching rule, it is determined that the to-be-classified text meets the matching rule; or when the to-be-classified text does not include all the keywords in the matching rule; it is determined that the to-be-classified text does not meet the matching rule.

For example, the keyword of the to-be-classified text is international roaming and cancel, and the matching rule is international roaming & cancel, that is, at least one keyword included in the matching rule is international roaming or cancel, it may be determined that the to-be-classified text includes all keywords in the matching rule, and it may be determined that the to-be-classified text meets the matching rule.

For another example, the keyword of the to-be-classified text is international roaming and cancel, and the matching rule is roaming & cancel & international, that is, at least one keyword included in the matching rule is roaming, cancel, or international, it may be determined that the to-be-classified text does not include all keywords in the matching rule, and it may be determined that the to-be-classified text does not meet the matching rule.

When the to-be-classified text does not meet the matching rule, and when the keyword vector of the to-be-classified text is determined based on the keyword of the to-be-classified text, a quantity of the multiple keywords included in the keyword library may be determined. Then, all keywords in the to-be-classified text are converted into a vector of which a quantity of dimensions is equal to the quantity, and the vector is determined as the keyword vector of the to-be-classified text.

For example, the quantity of the multiple keywords included in the keyword library is 8, and all the keywords in the to-be-classified text are international roaming and cancel, so that all the keywords in the to-be-classified text may be converted into a vector of which a quantity of dimensions is equal to 8, for example, all the keywords in the to-be-classified text may be converted into a vector (0, 1, 1, 0, 0, 0, 0, 0).

When the keyword vector of the matching rule is determined based on at least one keyword included in the matching rule, the quantity of the multiple keywords included in the keyword library may be determined, then, at least one keyword included in the matching rule is converted into a vector of which a quantity of dimensions is equal to the quantity, and the vector is determined as the keyword vector of the matching rule.

For example, the quantity of the multiple keywords included in the keyword library is 8, and the matching rule is roaming & cancel & international, that is, at least one keyword included in the matching rule is roaming, cancel, or international. In this case, at least one keyword included in the matching rule may be converted into a vector of which a quantity of dimensions is equal to 8, for example, at least one keyword included in the matching rule may be converted into a vector (1, 0, 1, 1, 0, 0, 0, 0).

It should be noted that, for the operation of determining, based on the keyword library and the matching rule library by using the pattern matching classifier, the first probability that the to-be-classified text belongs to each of the multiple preset classes, refer to related technologies. This is not described in detail in this embodiment of the present invention.

Step 305. Determine, based on the first probability that the to-be-classified text belongs to each of the multiple preset classes, a class to which the to-be-classified text belongs from the multiple preset classes.

In a possible design, the first probability that the to-be-classified text belongs to each of the multiple preset classes may be determined in step 304, and when a first probability that the to-be-classified text belongs to a preset class in the multiple preset classes is greater than a specified probability, the preset class may be determined as a class to which the to-be-classified text belongs.

It should be noted that the specified probability may be preset according to a specific service requirement, for example, the specified probability may be 0.8, 0.85, or the like. This is not specifically limited in this embodiment of the present invention.

For example, if the specified probability is 0.8, and a first probability that the to-be-classified text belongs to a preset class in the multiple preset classes is 0.85, it may be determined that the first probability that the to-be-classified text belongs to the preset class is greater than the specified probability, and the preset class is determined as the class to which the to-be-classified text belongs.

In another possible design, a second probability that the to-be-classified text belongs to each of the multiple preset classes may be determined based on multiple preset semantic feature vectors included in the semantic classifier, and the multiple preset semantic feature vectors are in a one-to-one correspondence with the multiple preset classes; and the class to which the to-be-classified text belongs is determined from the multiple preset classes based on the first probability that the to-be-classified text belongs to each of the multiple preset classes and the second probability that the to-be-classified text belongs to each of the multiple preset classes.

When the second probability that the to-be-classified text belongs to each of the multiple preset classes is determined based on the multiple preset semantic feature vectors included in the semantic classifier, a semantic feature vector of each word in the to-be-classified text may be determined by using the semantic classifier; a semantic feature vector of the to-be-classified text is determined based on the semantic feature vector of each word in the to-be-classified text by using the semantic classifier; for each of the multiple preset semantic feature vectors, similarity between the preset semantic feature vector and the semantic feature vector of the to-be-classified text is calculated by using the semantic classifier; and the similarity obtained by means of calculation is determined as a second probability that the to-be-classified text belongs to a preset class corresponding to the preset semantic feature vector.

It should be noted that the semantic classifier is configured to classify the to-be-classified text based on semantic information of the to-be-classified text, for example, the semantic classifier may be a recursive convolutional neural network. This is not specifically limited in this embodiment of the present invention.

In addition, a semantic feature vector of a word is a feature vector that can reflect semantic information of the word and a dependency relationship of the word in a context. The semantic feature vector of the to-be-classified text is a feature vector that can reflect semantic information of the to-be-classified text. This is not specifically limited in this embodiment of the present invention.

In addition, the multiple preset semantic feature vectors may be preset. This is not specifically limited in this embodiment of the present invention.

When the semantic feature vector of each word in the to-be-classified text is determined by using the semantic classifier, the semantic feature vector of each word in the to-be-classified text may be determined by using a word feature extraction layer of the semantic classifier. This is not specifically limited in this embodiment of the present invention. In addition, for the operation of determining a semantic feature vector of each word in the to-be-classified text by using the semantic classifier, refer to related technologies. This is not described in detail in this embodiment of the present invention.

When the semantic feature vector of the to-be-classified text is determined based on the semantic feature vector of each word in the to-be-classified text by using the semantic classifier, the semantic feature vector of the to-be-classified text may be determined based on the semantic feature vector of each word in the to-be-classified text by using a text feature extraction layer of the semantic classifier. This is not specifically limited in this embodiment of the present invention. In addition, for the operation of determining the semantic feature vector of the to-be-classified text based on the semantic feature vector of each word in the to-be-classified text by using the semantic classifier, refer to related technologies. This is not described in detail in this embodiment of the present invention.

It should be noted that the word feature extraction layer and the text feature extraction layer may use a recursive structure, to ensure that a semantic feature vector of a word determined by using the word feature extraction layer can reflect semantic information of the word, and can further reflect a dependency relationship of the word in a context, so as to further ensure that a semantic feature vector of the to-be-classified text that is determined based on the semantic feature vector of the word by using the text feature extraction layer can completely reflect semantic information of the to-be-classified text.

For each of the multiple preset semantic feature vectors, when the similarity between the preset semantic feature vector and the semantic feature vector of the to-be-classified text is calculated by using the semantic classifier, the similarity between the preset semantic feature vector and the semantic feature vector of the to-be-classified text may be calculated by using a classification layer in the semantic classifier. This is not specifically limited in this embodiment of the present invention. In addition, for the operation of calculating the similarity between the preset semantic feature vector and the semantic feature vector of the to-be-classified text by using the semantic classifier, refer to a related operation in step 302. This is not specifically limited in this embodiment of the present invention.

It should be noted that, in related technologies, during text classification, a term frequency-inverse document frequency (Term Frequency-Inverse Document Frequency, TF-IDF) feature of a to-be-classified text is generally extracted first, then, a class to which the TF-IDF feature of the to-be-classified text belongs is determined by using a support vector machine (Support Vector Machine, SVM for short) classifier, and the class to which the TF-IDF feature of the to-be-classified text belongs is determined as a class to which the to-be-classified text belongs. The TF-IDF feature is statistics about term frequency for only important words, and lacks higher layer information of text semantic understanding. Therefore, texts that belong to different classes may have extremely similar TF-IDF features, and consequently, text classification accuracy is relatively low in the related technologies. However, in this embodiment of the present invention, the semantic classifier classifies the to-be-classified text based on the semantic information of the to-be-classified text, so as to effectively avoid misclassification of the to-be-classified text caused by lack of information, thereby improving text classification accuracy.

Further, before the second probability that the to-be-classified text belongs to each of the multiple preset classes is determined based on the multiple preset semantic feature vectors included in the semantic classifier, a preset text set may be obtained, and multiple preset texts included in the preset text set are pre-processed, to obtain a second training corpus. Then, the second training corpus is used to train a to-be-trained semantic classifier, to obtain the semantic classifier. The preset text set includes multiple preset texts, and each of the multiple preset classes is corresponding to at least one preset text.

It should be noted that the preset text set may be preset, and the preset text set may be stored in the server, or may be stored in another storage device, and the server and the another storage device may communicate with each other by using a wired network or a wireless network. This is not specifically limited in this embodiment of the present invention.

In addition, the multiple preset texts may be preset, and the multiple preset texts may be customer service texts of the multiple preset classes. This is not specifically limited in this embodiment of the present invention. Each of the multiple preset classes is corresponding to at least one preset text in the preset text set, that is, the multiple preset texts are texts with class identifiers.

In addition, in this embodiment of the present invention, when the to-be-trained semantic classifier is trained by using the preset text set, the to-be-trained semantic classifier may be trained by means of monitoring learning. The monitoring learning is a process in which when input and output of the semantic classifier are given, a parameter of the semantic classifier is continuously adjusted by using a specified adjustment algorithm, so that the semantic classifier can reach required performance.

It should be noted that the specified adjustment algorithm may be preset, for example, the specified adjustment algorithm may be a stochastic gradient descent algorithm. This is not specifically limited in this embodiment of the present invention.

In addition, for the operation of training the to-be-trained semantic classifier by using the second training corpus, to obtain the semantic classifier, refer to related technologies. This is not described in detail in this embodiment of the present invention.

In addition, the operation of pre-processing multiple preset texts included in the preset text set is similar to a related operation in step 301. This is not described again in this embodiment of the present invention.

When the class to which the to-be-classified text belongs is determined from the multiple preset classes based on the first probability that the to-be-classified text belongs to each of the multiple preset classes and the second probability that the to-be-classified text belongs to each of the multiple preset classes, at least one target preset class may be determined from the multiple preset classes; for each of the at least one target preset class, a first probability and a second probability corresponding to the target preset class are determined; weighted averaging is performed, based on a first weight corresponding to the pattern matching classifier and a second weight corresponding to the semantic classifier, on the first probability and the second probability corresponding to the target preset class, to obtain a weighted probability; and when the weighted probability is greater than a specified probability, the target preset class is determined as the class to which the to-be-classified text belongs.

The operation of determining at least one target preset class from the multiple preset classes may be performed in the following three manners:
Manner 1: Determine each of the multiple preset classes as the target preset class.
Manner 2: Obtain N first probabilities from multiple first probabilities corresponding to the multiple preset classes in descending order of the multiple first probabilities, and determine a preset class corresponding to each of the N first probabilities as the target preset class, where N is a natural number greater than or equal to 1.
Manner 3: Obtain N second probabilities from multiple second probabilities corresponding to the multiple preset classes in descending order of the multiple second probabilities, and determine a preset class corresponding to each of the N second probabilities as the target preset class.

It should be noted that Manner 2 and Manner 3 may be independently performed to determine the at least one target preset class from the multiple preset classes. Certainly, Manner 2 and Manner 3 may be combined to determine the at least one target preset class from the multiple preset classes. This is not specifically limited in this embodiment of the present invention.

In addition, in this embodiment of the present invention, each of the multiple preset classes may be directly determined as the target preset class. In this case, the server does not need to perform another operation, so that efficiency of determining the target preset class can be improved. In addition, in this embodiment of the present invention, at least one target preset class may be determined based on the first probability and the second probability. In this case, the at least one target preset class is some preset classes in the multiple preset classes. Therefore, the server does not need to calculate a weighted probability for each of the multiple preset classes in subsequent steps, but calculates weighted probabilities for only some preset classes in the multiple preset classes, so that processing resources of the server can be saved, and text classification efficiency can be improved.

When the weighted averaging is performed, based on the first weight corresponding to the pattern matching classifier and the second weight corresponding to the semantic classifier, on the first probability and the second probability corresponding to the target preset class, to obtain the weighted probability, the first weight may be multiplied by the first probability corresponding to the target preset class to obtain a first value, the second weight may be multiplied by the second probability corresponding to the target preset class to obtain a second value, and the first value and the second value are added to obtain the weighted probability.

It should be noted that the first weight and the second weight may be preset. In actual application, the first weight and the second weight may be set and adjusted according to reliability of the pattern matching classifier and the semantic classifier, and may be set and adjusted according to different service requirements. This is not specifically limited in this embodiment of the present invention.

It should be noted that, in this embodiment of the present invention, the pattern matching classifier and the semantic classifier may be combined to perform text classification, so as to avoid inaccuracy caused by depending on a single method for text classification. In addition, the first weight and the second weight may be set and adjusted according to different service requirements, so that it can be ensured that an obtained weighted probability meets a text classification requirement of a person skilled in the art.

In addition, the text classification method provided in this embodiment of the present invention may be used for classification of a customer service text generated in a customer service platform of a telecommunications operator or an Internet operator. In this embodiment of the present invention, the keyword library and the service rule library can be efficiently constructed, and the pattern matching classifier and the semantic classifier can be combined to perform text classification. Therefore, even if a matching rule of the customer service text is relatively complex and a data volume is relatively large, the customer service text can be well classified, and text classification accuracy can be ensured. Certainly, the text classification method provided in this embodiment of the present invention may also be applied to another field, to classify a text of another type. This is not specifically limited in this embodiment of the present invention.

It should be noted that, in this embodiment of the present invention, when a server is a server cluster that includes multiple node servers, an underlying architecture of the server may use a Hadoop distributed computing platform. This is not specifically limited in this embodiment of the present invention. In addition, when the underlying architecture of the server uses the Hadoop distributed computing platform, the Hadoop distributed computing platform may include components such as an HDFS, Map-Reduce, and Hive. In addition, the HDFS component is configured to store a text, a keyword library, a matching rule library, and the like. The Map-Reduce component and the Hive component are configured to support a core operation of text classification, and the core operation may include operations such as determining the first probability, the second probability, the weighted probability, and the like.

In this embodiment of the present invention, for each of the multiple keywords included in the keyword library of the service information library, the word vector corresponding to the keyword is determined according to the word vector model; the potential extended word of the keyword is determined based on the word vector corresponding to the keyword; and then, when the extension rule input for the potential extended word is received, and when the adding instruction for the potential extended word is detected, the potential extended word is added to the keyword library, and the extension rule is added to the matching rule library of the service information library. That is, the keyword library and the matching rule library are constructed semi-manually, so that a construction time is reduced, construction efficiency is improved, and manual costs for constructing and maintaining the keyword library and the matching rule library are reduced. In addition, because the keyword library and the matching rule library can be extended and updated according to the potential extended word determined by the server, coverage of the keyword library and the matching rule library may be improved. In addition, because the adding instruction is triggered by a person skilled in the art, the potential extended word and the extension rule are added to the keyword library and the matching rule library after confirmation by the person skilled in the art. Therefore, accuracy of the keyword library and the matching rule library can be improved. Because coverage and accuracy of the keyword library and the matching rule library are improved, the first probability that the to-be-classified text belongs to each of the multiple preset classes is determined based on the keyword library and the matching rule library, and the class to which the to-be-classified text belongs is determined from the multiple preset classes based on the first probability that the to-be-classified text belongs to each of the multiple preset classes, coverage and accuracy of text classification can be improved.

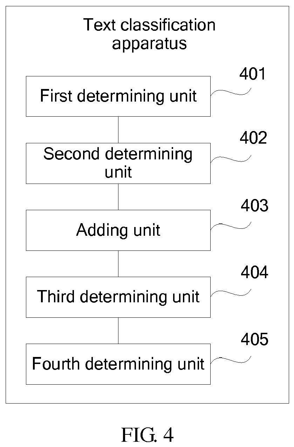

FIG. 4 is a schematic structural diagram of a text classification apparatus according to an embodiment of the present invention. The text classification apparatus belongs to the same invention conception as the foregoing method embodiment. As shown in FIG. 4, a structure of the text classification apparatus is configured to execute functions of the server in the method embodiment shown in FIG. 3, and includes a first determining unit 401, a second determining unit 402, an adding unit 403, a third determining unit 404, and a fourth determining unit 405.

The first determining unit 401 is configured to: for each of multiple keywords included in a keyword library of a service information library, determine, according to a word vector model, a word vector corresponding to the keyword.

The second determining unit 402 is configured to determine a potential extended word of the keyword based on the word vector corresponding to the keyword.

The adding unit 403 is configured to: when an extension rule input for the potential extended word is received, and when an adding instruction for the potential extended word is detected, add the potential extended word to the keyword library, and add the extension rule to a matching rule library of the service information library.

The third determining unit 404 is configured to determine, based on the keyword library and the matching rule library by using a pattern matching classifier, a first probability that a to-be-classified text belongs to each of multiple preset classes.

The fourth determining unit 405 is configured to determine, based on the first probability that the to-be-classified text belongs to each of the multiple preset classes, a class to which the to-be-classified text belongs from the multiple preset classes.

Optionally, the second determining unit 402 is configured to:
determine, according to the word vector model, a word vector corresponding to each word included in a text dataset;
calculate similarity between the word vector corresponding to the keyword and the word vector corresponding to each word included in the text dataset; and
determine a similar word in the text dataset as the potential extended word of the keyword, where similarity between a word vector corresponding to the similar word and the word vector corresponding to the keyword is greater than specified similarity.

Optionally, the third determining unit 404 is configured to:
obtain a word that is the same as a keyword in the keyword library from the to-be-classified text by using the pattern matching classifier;
determine the obtained word as a keyword of the to-be-classified text;
classify the to-be-classified text based on the keyword of the to-be-classified text and the matching rule library by using the pattern matching classifier, to obtain the first probability that the to-be-classified text belongs to each of the multiple preset classes, where the matching rule library includes multiple matching rules, each of the multiple matching rules includes at least one keyword in the keyword library, and each preset class is corresponding to at least one matching rule in the matching rule library.

Optionally, the fourth determining unit 405 is configured to:
determine, based on multiple preset semantic feature vectors included in a semantic classifier, a second probability that the to-be-classified text belongs to each of the multiple preset classes, where the multiple preset semantic feature vectors are in a one-to-one correspondence with the multiple preset classes; and
determine, based on the first probability that the to-be-classified text belongs to each of the multiple preset classes and the second probability that the to-be-classified text belongs to each of the multiple preset classes, the class to which the to-be-classified text belongs from the multiple preset classes.

Optionally, the fourth determining unit 405 is further configured to:
determine a semantic feature vector of each word in the to-be-classified text by using the semantic classifier;
determine a semantic feature vector of the to-be-classified text based on the semantic feature vector of each word in the to-be-classified text by using the semantic classifier;
for each of the multiple preset semantic feature vectors, calculate similarity between the preset semantic feature vector and the semantic feature vector of the to-be-classified text by using the semantic classifier; and
determine the similarity obtained by means of calculation as a second probability that the to-be-classified text belongs to a preset class corresponding to the preset semantic feature vector.

Optionally, the fourth determining unit 405 is further configured to:
determine at least one target preset class from the multiple preset classes;
for each of the at least one target preset class, determine a first probability and a second probability corresponding to the target preset class;
perform, based on a first weight corresponding to the pattern matching classifier and a second weight corresponding to the semantic classifier, weighted averaging on the first probability and the second probability corresponding to the target preset class, to obtain a weighted probability; and
when the weighted probability is greater than a specified probability, determine the target preset class as the class to which the to-be-classified text belongs.

Optionally, the fourth determining unit 405 is further configured to:
determine each of the multiple preset classes as the target preset class.

Optionally, the fourth determining unit is further configured to perform at least one of the following two manners:
obtaining N first probabilities from multiple first probabilities corresponding to the multiple preset classes in descending order of the multiple first probabilities, and determining a preset class corresponding to each of the N first probabilities as the target preset class, where N is a natural number greater than or equal to 1; or
obtaining N second probabilities from multiple second probabilities corresponding to the multiple preset classes in descending order of the multiple second probabilities, and determining a preset class corresponding to each of the N second probabilities as the target preset class.

In this embodiment of the present invention, the text classification apparatus is represented in a form of a function unit. The "unit" herein may be an ASIC, a processor and a memory that are configured to perform one or more software programs or firmware programs, an integrated logic circuit, and/or another device that can provide the foregoing functions. In a simple embodiment, as figured out by a person skilled in the art, the text classification apparatus may use a form shown in FIG. 2. The first determining unit 401, the second determining unit 402, the adding unit 403, the third determining unit 404, and the fourth determining unit 405 may be implemented by a processor and a memory shown in FIG. 2. Specifically, the first determining unit 401, the second determining unit 402, and the adding unit 403 may be implemented by executing, by the processor, a service information library construction module. The third determining unit 404 may be implemented by executing, by the processor, a pattern matching classification module. The fourth determining unit 405 may be implemented by executing, by the processor, a semantic classification module, a weighted fusion module, and a class determining module.

The embodiments of the present invention further provide a computer storage medium that is configured to store a computer software instruction for implementing the text classification apparatus shown in FIG. 4, and the computer software instruction includes a program designed for performing the foregoing method embodiment. By executing the stored program, the to-be-classified text can be classified.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are example embodiments, and the related actions and modules are not necessarily mandatory to the present invention.

Although the present invention is described with reference to the embodiments, in a process of implementing the present invention that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Persons skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code. The computer program is stored/distributed in a proper medium and is provided as or used as a part of the hardware together with another hardware, or may also use another allocation form, such as by using the Internet or another wired or wireless telecommunications system.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and the embodiments thereof, obviously, various modifications and combinations may be made to them without departing from the spirit and scope of the present invention. Correspondingly, the specification and accompanying drawings are merely examples description of the present invention defined by the accompanying claims, and is considered as any of or all modifications, variations, combinations or equivalents that cover the scope of the present invention. Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A text classification method, wherein the method comprises:
for each of multiple keywords comprised in a keyword library of a service information library, determining, according to a word vector model, a word vector corresponding to the keyword;
determining a potential extended word of the keyword based on the word vector corresponding to the keyword;
when an extension rule input for the potential extended word is received, and when an adding instruction for the potential extended word is detected, adding the potential extended word to the keyword library, and adding the extension rule to a matching rule library of the service information library;
determining, based on the keyword library and the matching rule library by using a pattern matching classifier, a first probability that a to-be-classified text belongs to each of multiple preset classes; and
determining, based on the first probability that the to-be-classified text belongs to each of the multiple preset classes, a class to which the to-be-classified text belongs from the multiple preset classes.

2. The method according to claim 1, wherein the determining a potential extended word of the keyword based on the word vector corresponding to the keyword comprises:
determining, according to the word vector model, a word vector corresponding to each word comprised in a text dataset;
calculating similarity between the word vector corresponding to the keyword and the word vector corresponding to each word comprised in the text dataset; and
determining a similar word in the text dataset as the potential extended word of the keyword, wherein similarity between a word vector corresponding to the similar word and the word vector corresponding to the keyword is greater than specified similarity.

3. The method according to claim 1 or 2, wherein the determining, based on the keyword library and the matching rule library by using a pattern matching classifier, a first probability that a to-be-classified text belongs to each of multiple preset classes comprises:
obtaining, from the to-be-classified text by using the pattern matching classifier, a word that is the same as a keyword in the keyword library;
determining the obtained word as a keyword of the to-be-classified text;
classifying the to-be-classified text based on the keyword of the to-be-classified text and the matching rule library by using the pattern matching classifier, to obtain the first probability that the to-be-classified text belongs to each of the multiple preset classes, wherein the matching rule library comprises multiple matching rules, each of the multiple matching rules comprises at least one keyword in the keyword library, and each preset class is corresponding to at least one matching rule in the matching rule library.

4. The method according to any one of claims 1 to 3, wherein the determining, based on the first probability that the to-be-classified text belongs to each of the multiple preset classes, a class to which the to-be-classified text belongs from the multiple preset classes comprises:
determining, based on multiple preset semantic feature vectors comprised in a semantic classifier, a second probability that the to-be-classified text belongs to each of the multiple preset classes, wherein the multiple preset semantic feature vectors are in a one-to-one correspondence with the multiple preset classes; and
determining, based on the first probability that the to-be-classified text belongs to each of the multiple preset classes and the second probability that the to-be-classified text belongs to each of the multiple preset classes, the class to which the to-be-classified text belongs from the multiple preset classes.

5. The method according to claim 4, wherein the determining, based on multiple preset semantic feature vectors comprised in a semantic classifier, a second probability that the to-be-classified text belongs to each of the multiple preset classes comprises:
determining a semantic feature vector of each word in the to-be-classified text by using the semantic classifier;
determining a semantic feature vector of the to-be-classified text based on the semantic feature vector of each word in the to-be-classified text by using the semantic classifier;
for each of the multiple preset semantic feature vectors, calculating similarity between the preset semantic feature vector and the semantic feature vector of the to-be-classified text by using the semantic classifier; and
determining the similarity obtained by means of calculation as a second probability that the to-be-classified text belongs to a preset class corresponding to the preset semantic feature vector.

6. The method according to claim 4 or 5, wherein the determining, based on the first probability that the to-be-classified text belongs to each of the multiple preset classes and the second probability that the to-be-classified text belongs to each of the multiple preset classes, the class to which the to-be-classified text belongs from the multiple preset classes comprises:
determining at least one target preset class from the multiple preset classes;
for each of the at least one target preset class, determining a first probability and a second probability corresponding to the target preset class;
performing, based on a first weight corresponding to the pattern matching classifier and a second weight corresponding to the semantic classifier, weighted averaging on the first probability and the second probability corresponding to the target preset class, to obtain a weighted probability; and
when the weighted probability is greater than a specified probability, determining the target preset class as the class to which the to-be-classified text belongs.

7. The method according to claim 6, wherein the determining at least one target preset class from the multiple preset classes comprises:
determining each of the multiple preset classes as the target preset class.

8. The method according to claim 6, wherein the determining at least one target preset class from the multiple preset classes comprises at least one of the following two manners:
obtaining N first probabilities from multiple first probabilities corresponding to the multiple preset classes in descending order of the multiple first probabilities, and determining a preset class corresponding to each of the N first probabilities as the target preset class, wherein N is a natural number greater than or equal to 1; or
obtaining N second probabilities from multiple second probabilities corresponding to the multiple preset classes in descending order of the multiple second probabilities, and determining a preset class corresponding to each of the N second probabilities as the target preset class.

9. A text classification apparatus, wherein the apparatus comprises:
a first determining unit, configured to: for each of multiple keywords comprised in a keyword library of a service information library, determine, according to a word vector model, a word vector corresponding to the keyword;
a second determining unit, configured to determine a potential extended word of the keyword based on the word vector corresponding to the keyword;
an adding unit, configured to: when an extension rule input for the potential extended word is received, and when an adding instruction for the potential extended word is detected, add the potential extended word to the keyword library, and add the extension rule to a matching rule library of the service information library;
a third determining unit, configured to determine, based on the keyword library and the matching rule library by using a pattern matching classifier, a first probability that a to-be-classified text belongs to each of multiple preset classes; and
a fourth determining unit, configured to determine, based on the first probability that the to-be-classified text belongs to each of the multiple preset classes, a class to which the to-be-classified text belongs from the multiple preset classes.

10. The apparatus according to claim 9, wherein:
that the second determining unit is configured to determine the potential extended word of the keyword based on the word vector corresponding to the keyword is specifically:
determining, according to the word vector model, a word vector corresponding to each word comprised in a text dataset;
calculating similarity between the word vector corresponding to the keyword and the word vector corresponding to each word comprised in the text dataset; and
determining a similar word in the text dataset as the potential extended word of the keyword, wherein similarity between a word vector corresponding to the similar word and the word vector corresponding to the keyword is greater than specified similarity.

11. The apparatus according to claim 9 or 10, wherein:
that the third determining unit is configured to determine, based on the keyword library and the matching rule library by using the pattern matching classifier, the first probability that the to-be-classified text belongs to each of the multiple preset classes is specifically:
obtaining, from the to-be-classified text by using the pattern matching classifier, a word that is the same as a keyword in the keyword library;
determining the obtained word as a keyword of the to-be-classified text;
classifying the to-be-classified text based on the keyword of the to-be-classified text and the matching rule library by using the pattern matching classifier, to obtain the first probability that the to-be-classified text belongs to each of the multiple preset classes, wherein the matching rule library comprises multiple matching rules, each of the multiple matching rules comprises at least one keyword in the keyword library, and each preset class is corresponding to at least one matching rule in the matching rule library.

12. The apparatus according to any one of claims 9 to 11, wherein:
that the fourth determining unit is configured to determine, based on the first probability that the to-be-classified text belongs to each of the multiple preset classes, the class to which the to-be-classified text belongs from the multiple preset classes is specifically:
determining, based on multiple preset semantic feature vectors comprised in a semantic classifier, a second probability that the to-be-classified text belongs to each of the multiple preset classes, wherein the multiple preset semantic feature vectors are in a one-to-one correspondence with the multiple preset classes; and
determining, based on the first probability that the to-be-classified text belongs to each of the multiple preset classes and the second probability that the to-be-classified text belongs to each of the multiple preset classes, the class to which the to-be-classified text belongs from the multiple preset classes.

13. The apparatus according to claim 12, wherein:
that the fourth determining unit is configured to determine, based on the multiple preset semantic feature vectors comprised in the semantic classifier, the second probability that the to-be-classified text belongs to each of the multiple preset classes is specifically:
determining a semantic feature vector of each word in the to-be-classified text by using the semantic classifier;
determining a semantic feature vector of the to-be-classified text based on the semantic feature vector of each word in the to-be-classified text by using the semantic classifier;
for each of the multiple preset semantic feature vectors, calculating similarity between the preset semantic feature vector and the semantic feature vector of the to-be-classified text by using the semantic classifier; and
determining the similarity obtained by means of calculation as a second probability that the to-be-classified text belongs to a preset class corresponding to the preset semantic feature vector.

14. The apparatus according to claim 12 or 13, wherein:
that the fourth determining unit is configured to determine, based on the first probability that the to-be-classified text belongs to each of the multiple preset classes and the second probability that the to-be-classified text belongs to each of the multiple preset classes, the class to which the to-be-classified text belongs from the multiple preset classes is specifically:
determining at least one target preset class from the multiple preset classes;
for each of the at least one target preset class, determining a first probability and a second probability corresponding to the target preset class;
performing, based on a first weight corresponding to the pattern matching classifier and a second weight corresponding to the semantic classifier, weighted averaging on the first probability and the second probability corresponding to the target preset class, to obtain a weighted probability; and
when the weighted probability is greater than a specified probability, determining the target preset class as the class to which the to-be-classified text belongs.

15. The apparatus according to claim 14, wherein:
that the fourth determining unit is configured to determine the at least one target preset class from the multiple preset classes is specifically:
determining each of the multiple preset classes as the target preset class.

16. The apparatus according to claim 14, wherein:
that the fourth determining unit is configured to determine the at least one target preset class from the multiple preset classes is specifically:
obtaining N first probabilities from multiple first probabilities corresponding to the multiple preset classes in descending order of the multiple first probabilities, and determining a preset class corresponding to each of the N first probabilities as the target preset class, wherein N is a natural number greater than or equal to 1; or
obtaining N second probabilities from multiple second probabilities corresponding to the multiple preset classes in descending order of the multiple second probabilities, and determining a preset class corresponding to each of the N second probabilities as the target preset class.

17. A text classification apparatus, wherein the apparatus comprises:
a processor and a memory; wherein
the memory stores a computer readable program; and
the processor is configured to implement the method according to claims 1 to 8 by running the program in the memory.
